# EUROPEAN PATENT APPLICATION

(11) **EP 4 645 493 A1**
(43) Date of publication of application: **05.11.2025**
(21) Application number: 24775154.8
(22) Date of filing: 18.03.2024
(51) Int. Cl.: H01M 10/052, H01M 10/0569, H01M 4/505, H01M 4/525, H01M 10/0567, H01M 10/0568, H01M 4/583, H01M 4/38, H01M 4/48

(54) **LITHIUM SECONDARY BATTERY**

(30) Priority: 20.03.2023 KR 20230035847; 15.12.2023 KR 20230183779
(71) Applicant: LG Energy Solution, Ltd., Seoul 07335 (KR)
(72) Inventor: LEE, Jung Min, Daejeon 34122 (KR); YEOM, Chul Eun, Daejeon 34122 (KR); JI, Su Hyeon, Daejeon 34122 (KR); LEE, Chul Haeng, Daejeon 34122 (KR)
(74) Representative: Hoffmann Eitle
(86) International application number: PCT/KR2024/003365
(87) International publication number: WO 2024/196106

(57) **Abstract**

A lithium secondary battery includes a positive electrode; a negative electrode; a separator interposed between the positive electrode and the negative electrode; and a non-aqueous electrolyte. The positive electrode includes a positive electrode active material, the positive electrode material includes a perlithium manganese-rich oxide containing 50 mol% or more of Mn based on all metal elements excluding lithium, and having a molar ratio of lithium to transition metal exceeding 1, the non-aqueous electrolyte includes a lithium ion and an organic solvent, the organic solvent includes a first organic solvent and a second organic solvent, the first organic solvent includes ethylene carbonate, and the second organic solvent includes diethyl carbonate and propyl propionate.

## Description

### TECHNICAL FIELD

### Cross-reference to related applications

This application is based on and claims priority from Korean Patent Application No. 10-2023-0035847, filed on March 20, 2023 and Korean Patent Application No. 10-2023-0183779, filed on December 15, 2023 with the Korean Intellectual Property Office, the disclosure of which is incorporated herein in its entirety by reference.

### Technical field

The present disclosure relates to a lithium secondary battery.

### BACKGROUND ART

Recently, the applications of lithium secondary batteries have rapidly expanded not only from the supply of power for electricity, electronics, communication, and electronic devices such as computers but also to the storage and supply of power for large-sized devices such as automobiles and energy storage systems. Consequently, there is an increasing demand for secondary batteries with a high capacity, high power, and high stability.

The lithium secondary battery generally includes a positive electrode containing a positive electrode active material, a negative electrode containing a negative electrode active material, an electrolyte that serves as a medium for transferring lithium ions, and a separator. In this case, the negative electrode active material may be a carbon-based active material or a silicon-based active material. In addition, the positive electrode active material may be lithium transition metal oxide such as lithium cobalt oxide (LiCoO₂), lithium nickel oxide (LiNiO₂), or lithium nickel-cobalt-manganese composite oxide.

Meanwhile, improvements are being made to the characteristics of each of the positive electrode, the negative electrode, the electrolyte, and the separator to construct high-capacity secondary batteries.

### DISCLOSURE OF THE INVENTION

### TECHNICAL PROBLEM

The present disclosure provides a lithium secondary battery including a perlithium manganese-rich oxide as a positive electrode active material, which reduces the amount of gas generation such as CO₂ at the positive electrode interface during high-voltage or high-temperature operation, reduces gas generation during initial activation, and charging and discharging, and suppresses the elution of transition metal from the positive electrode active material, thereby simultaneously improving lifespan at high temperatures, reducing resistance, and preventing gas generation.

### TECHNICAL SOLUTION

The present disclosure provides a lithium secondary battery including a positive electrode; a negative electrode; a separator interposed between the positive electrode and the negative electrode; and a non-aqueous electrolyte, in which the positive electrode includes a positive electrode active material, the positive electrode active material includes a perlithium manganese-rich oxide containing about 50 mol% or more of Mn based on all metal elements excluding lithium, and having a molar ratio of lithium to transition metal exceeding about 1, the non-aqueous electrolyte includes a lithium salt and an organic solvent, the organic solvent includes a first organic solvent and a second organic solvent, the first organic solvent includes ethylene carbonate, and the second organic solvent includes diethyl carbonate and propyl propionate.

### ADVANTAGEOUS EFFECTS

The lithium secondary battery of the present disclosure utilizes perlithium manganese-rich oxide as the positive electrode active material, and the organic solvent contained in the non-aqueous electrolyte includes ethylene carbonate, diethyl carbonate, and propyl propionate. According to the present disclosure, the combination of the above-mentioned organic solvents enables the realization of a lithium secondary battery that significantly reduces the amount of gas generation at the positive electrode interface including a perlithium manganese-rich oxide, improves the lifespan performance of the negative electrode, and consequently has an excellent capacity retention rate and gas generation reduction performance. The lithium secondary battery of the present disclosure has an excellent lifespan performance and gas reduction performance, especially at high temperatures and high voltages.

### MODE FOR CARRYING OUT THE INVENTION

In the following detailed description, reference is made to the accompanying drawings which form a part hereof. The illustrative embodiments described in the detailed description, drawings, and claims are not meant to be limiting. Other embodiments may be utilized, and other changes may be made without departing from the spirit or scope of the subject matter presented herein.

In the descriptions herein, terms such as "include, " "provide," and "have" are intended to designate the presence of features, numerals, steps, operations, components, and parts described herein, or combinations thereof, but should not be interpreted to exclude the possibility of presence or addition of one or more other features, numerals, steps, operations, components, parts, or combinations thereof.

As used herein, the average particle size (D50) may be defined as the particle size corresponding to 50% of the volume accumulation in the particle size distribution curve of the particles. The average particle size D50 may be measured, for example, using a laser diffraction method. The laser diffraction method is generally capable of measuring particle sizes from the submicron region down to a few millimeters and may obtain results with high reproducibility and high resolution.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

Perlithium manganese-rich oxide is attracting attention as a next-generation positive electrode active material for constructing high-capacity batteries. The perlithium manganese-rich oxide is a relatively inexpensive and abundant source of manganese (Mn), and lithium secondary batteries using the perlithium manganese-rich oxide have the advantage of high capacity. However, the application of these perlithium manganese-rich oxides has the problem of significantly increasing gas generation such as CO₂ due to electrolyte side reactions at the positive electrode interface when operating at high voltage (*e.g.,* 4.35 V or higher) or high temperature. In addition, in the case of perlithium manganese-rich oxide, the utilization of the material is limited by the fact that the reactive oxygen generated by the phase conversion of the positive electrode active material during the activation (formation), charging, and discharging process intensifies the decomposition of the electrolyte and greatly increases the amount of gas such as CO₂, and the transition metal eluted from the positive electrode active material is electrodeposited on the negative electrode, thereby destroying the solid electrolyte interphase (SEI) film of the negative electrode.

The present disclosure provides a lithium secondary battery that overcomes the aforementioned gas generation problem and the SEI film destruction problem of the negative electrode while applying a perlithium manganese-rich oxide as the positive electrode active material of the lithium secondary battery.

Hereinafter, the present disclosure will be described in more detail.

### Lithium Secondary Battery

The present disclosure relates to a lithium secondary battery.

The lithium secondary battery according to the present disclosure includes a positive electrode; a negative electrode; a separator interposed between the positive electrode and the negative electrode; and a non-aqueous electrolyte, in which the positive electrode includes a positive electrode active material, the positive electrode active material includes a perlithium manganese-rich oxide containing about 50 mol% or more of Mn based on all metal elements excluding lithium, and having a molar ratio of lithium to transition metal exceeding about 1, the non-aqueous electrolyte includes a lithium salt and an organic solvent, the organic solvent includes a first organic solvent and a second organic solvent, the first organic solvent includes ethylene carbonate, and the second organic solvent includes diethyl carbonate and propyl propionate.

The lithium secondary battery includes a positive electrode; a negative electrode; a separator; and a non-aqueous electrolyte. For example, the lithium secondary battery includes a positive electrode; a negative electrode; a separator interposed between the positive electrode and the negative electrode; and a non-aqueous electrolyte. The lithium secondary battery may be manufactured by storing, in a battery case, an electrode assembly including a positive electrode, a negative electrode, and a separator interposed between the positive electrode and the negative electrode; and injecting a non-aqueous electrolyte into the battery case.

### (1) Positive Electrode

The positive electrode includes a positive electrode active material.

The positive electrode active material includes a perlithium manganese-rich oxide. The perlithium manganese-rich oxide according to the present disclosure contains about 50 mol% or more of Mn based on all metal elements excluding lithium, and having a molar ratio of lithium to transition metal exceeding about 1

The perlithium manganese-rich oxide is attracting attention as a next-generation high-capacity positive electrode active material, but its use is limited due to the material's inherent structural deterioration. For example, when the perlithium manganese-rich oxide is used as a positive electrode active material, there is a problem that an electrolyte side reaction occurs at the positive electrode interface and the amount of gases such as carbon dioxide (CO₂) generated significantly increases. In addition, during the initial activation of a lithium secondary battery containing perlithium manganese-rich oxide, reactive oxygen liberated from the perlithium manganese-rich oxide decomposes and consumes organic solvents (such as ethylene carbonate) contained in the non-aqueous electrolyte, thereby generating gas by-products, which lead to problems of reduced lifespan and performance, increased resistance, and reduced safety. In addition, there is a problem that manganese (Mn) is eluted to balance the charge as reactive oxygen is liberated during the charging and discharging process of the lithium secondary battery including the perlithium manganese-rich oxide. At this time, the eluted manganese is electrodeposited on the negative electrode and destroys the solid electrolyte interphase (SEI) film, and the reactive oxygen liberated during the charging and discharging process continuously decomposes and consumes the organic solvent in the non-aqueous electrolyte, thereby increasing the generation of gas byproducts. The consumption of the non-aqueous electrolyte, the structural collapse of the perlithium manganese-rich oxide, and the increase in gas byproducts significantly degrade the lifespan performance, resistance characteristics, and safety of the lithium secondary battery. Furthermore, these problems are exacerbated under high temperature and high voltage conditions.

In order to solve these problems, the lithium secondary battery according to the present disclosure includes ethylene carbonate, diethyl carbonate, and propyl propionate as organic solvents of the non-aqueous electrolyte, as will be described later. According to the present disclosure, the combination of the above-mentioned organic solvents enables the realization of a lithium secondary battery that significantly reduces the amount of gas generation at the positive electrode interface including a perlithium manganese-rich oxide, improves the lifespan performance of the negative electrode, and consequently has an excellent capacity retention rate and gas generation reduction performance, compared to conventional lithium secondary batteries. The lithium secondary battery of the present disclosure has an excellent lifespan performance and gas reduction performance, especially at high temperatures and high voltages.

The perlithium manganese-rich oxide may include a compound represented by Formula A:

(Formula A) Li₁₊ₛ[NiₜCoᵤMnᵥM¹_{w}]O_{2+z}

In Formula A, M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, and s, t, u, v, w, and z satisfy 0.05≤s≤1, 0≤t≤0.5, 0≤u≤0.3, 0.5≤v<1.0, 0≤w≤0.2, 0≤z≤1. For example, in Formula A, s, t, u, v, w, and z may satisfy 0.05≤s≤1.0, 0.1≤t≤0.5, 0≤u≤0.1, 0.5≤v<1.0, 0≤w≤0.2, and 0≤z≤1. Alternatively, in Formula A, s, t, u, v, w, and z may satisfy 0.10≤s≤0.50, 0.1≤t≤0.5, 0≤u≤0.1, 0.6≤v<1.0, 0≤w≤0.1, and 0≤z≤0.50.

According to an embodiment, the perlithium manganese-rich oxide may include a compound represented by Formula B:

(Formula B) XLi₂MnO₃ ·(1-X)Li[Ni_{1-y-z-w}Mn_{y}Co_{z}M¹_{w}]O₂

In Formula B, M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo. Further, in Formula B, X, y, z, and w may satisfy 0.1≤X≤0.5, 0.5≤y<1, 0≤z≤0.3, and 0≤w≤0.2, for example, 0.2≤X≤0.5, 0.5≤y<1, 0≤z≤0.1, 0≤w≤0.2, or 0.3≤X≤0.5, 0.6≤y<1, 0≤z≤0.1, and 0≤w≤0.2.

The positive electrode may include a positive electrode collector; and a positive electrode active material layer disposed on at least one side of the positive electrode collector. At this time, the positive electrode active material may be included in the positive electrode active material layer.

The positive electrode collector may be, without being particularly limited, any positive electrode collector that has high conductivity without causing chemical changes in the battery. For example, the positive electrode collector may include at least one selected from the group consisting of copper, stainless steel, aluminum, nickel, titanium, calcined carbon, and aluminum-cadmium alloy. According to one embodiment, the positive electrode collector may include aluminum.

The positive electrode collector may typically have a thickness of about 3 µm to 500 µm.

The positive electrode collector may have fine irregularities formed on the surface to strengthen the bonding force of the positive electrode active material. For example, the positive electrode collector may be used in various forms, such as a film, a sheet, a foil, a net, a porous body, a foam, and a non-woven body.

The positive electrode active material layer may be disposed on at least one side of the positive electrode collector, for example, one side or both sides of the positive electrode collector.

The positive electrode active material may be included in the positive electrode active material layer in an amount of about 80% by weight to 99% by weight, for example, about 92% by weight to 98.5% by weight, in consideration of sufficient capacity of the positive electrode active material.

Since the positive electrode active material has been described above, further descriptions will be omitted.

The positive electrode active material layer may further include a binder and/or a conductive material along with the positive electrode active material.

The binder is a component that aids in binding of the active material and the conductive material and binding to the collector, and may include, for example, at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene terpolymer (EPDM), sulfonated EPDM, styrene-butadiene rubber, and fluororubber. According to one embodiment, the binder may include polyvinylidene fluoride.

The binder may be included in the positive electrode active material layer in an amount of about 1% by weight to 20% by weight, for example, about 1.2% by weight to 10% by weight, in order to secure sufficient binding force between components such as the positive electrode active material.

The conductive material may be used to assist and improve conductivity in secondary batteries, and may be, without being particularly limited, any material that has conductivity without causing chemical changes. For example, the positive electrode conductive material may include at least one selected from the group consisting of graphite, such as natural graphite or artificial graphite; carbon black, such as carbon black, acetylene black, Ketchen black, channel black, furnace black, lamp black, and thermal black; conductive fibers, such as carbon fibers and metal fibers; conductive tubes, such as carbon nanotubes; fluorocarbon; metal powders, such as aluminum and nickel powders; conductive whiskers, such as zinc oxide and potassium titanate; conductive metal oxides, such as titanium oxide; polyphenylene derivatives. According to one embodiment, the positive electrode conductive material may include carbon nanotubes in terms of improving conductivity.

The conductive material may be included in the positive electrode active material layer in an amount of about 1% by weight to 20% by weight, for example, about 1.2% by weight to 10% by weight in terms of ensuring sufficient electrical conductivity. The thickness of the positive electrode active material layer may be about 30 µm to 400 µm, for example, about 40 µm to 110 µm.

The positive electrode may be manufactured by coating a positive electrode slurry containing a positive electrode active material and optionally a binder, a conductive material, and a solvent for forming a positive electrode slurry on the positive electrode collector, followed by drying and rolling.

The solvent for forming the positive electrode slurry may include an organic solvent such as NMP (N-methyl-2-pyrrolidone). The solid content of the positive electrode slurry may be about 40% by weight to 90% by weight, for example, about 50% by weight to 80% by weight.

### (2) Negative Electrode

The negative electrode may face the positive electrode.

The negative electrode includes a negative electrode active material.

The negative electrode active material is a material capable of reversibly inserting/extracting lithium ions, and may include at least one selected from the group consisting of a carbon-based active material, a (semi)metal-based active material, and lithium metal. For example, the negative electrode active material may include at least one selected from a carbon-based active material and a (semi)metal-based active material.

The carbon-based active material may include at least one selected from the group consisting of artificial graphite, natural graphite, hard carbon, soft carbon, carbon black, graphene, and fibrous carbon. For example, the carbon-based active material may include at least one member selected from the group consisting of artificial graphite and natural graphite.

The average particle diameter (D50) of the carbon-based active material may be about 10 µm to 30 µm, for example, about 15 µm to 25 µm in terms of ensuring structural stability during charging and discharging, and reducing side reactions with the electrolyte.

For example, the (semi)metal-based active material may include at least one selected from the group consisting of (semi)metal, alloy of (semi)metal and lithium, oxide of (semi)metal, lithium titanium oxide (LTO), and lithium vanadium oxide.

The (semi)metal may include at least one selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn.

The alloy of (semi)metal and lithium may include an alloy of lithium with at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn.

The oxide of (semi)metal may include an oxide of at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn.

According to an embodiment, the (semi)metal-based active material may include a silicon-based active material.

The silicon-based active material may include a compound represented by SiOₓ (0≤x<2). In the case of SiO₂, lithium cannot be stored because it does not react with lithium ions, so x is selected to be within the above range excluding 2. According to an embodiment, the silicon-based active material may be SiO.

The average particle diameter (D50) of the silicon-based active material may be about 1 µm to 30 µm, for example, about 2 µm to 15 µm in terms of ensuring structural stability during charging and discharging, and reducing side reactions with the electrolyte.

The negative electrode may include a negative electrode collector; and a negative electrode active material layer disposed on at least one side of the negative electrode collector. At this time, the negative electrode active material may be included in the negative electrode active material layer.

The negative electrode collector may be, without being particularly limited, any negative electrode collector that has high conductivity without causing chemical changes in the battery. For example, the negative electrode collector may be copper, stainless steel, aluminum, nickel, titanium, calcined carbon, copper, or stainless steel subjected to surface treatment with carbon, nickel, titanium, or silver, and aluminum-cadmium alloy.

The negative electrode collector may typically have a thickness of about 3 µm to 500 µm.

The negative electrode collector may have fine irregularities formed on the surface to strengthen the bonding force of the negative electrode active material. For example, the negative electrode collector may be used in various forms, such as a film, a sheet, a foil, a net, a porous body, a foam, and a non-woven body.

The negative electrode active material layer may be disposed on at least one side of the negative electrode collector, for example, one side or both sides of the negative electrode collector.

The negative electrode active material may be included in the negative electrode active material layer in an amount of about 60% by weight to 99% by weight, for example, about 75% by weight to 95% by weight.

Since the negative electrode active material has been described above, further descriptions will be omitted.

The negative electrode active material layer may further include a binder and/or a conductive material along with the negative electrode active material.

The binder is used to improve the adhesion with the negative electrode active material layer and the negative electrode collector, thereby improving the performance of the battery, and may include, for example, at least one selected from the group consisting of a polyvinylidenefluoride-hexafluoropropylene copolymer (PVDF-co-HFP), polyvinylidenefluoride (PVDF), polyacrylonitrile, polymethyl methacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, and substances thereof in which hydrogen is substituted with Li, Na, or Ca, and may also include various copolymers thereof.

The binder may be included in the negative electrode active material layer in an amount of about 0.5% by weight to 10% by weight, for example, about 1% by weight to 5% by weight.

The conductive material may be, without being particularly limited, any material that has conductivity without causing chemical changes in the battery. Examples thereof include graphite such as natural graphite or artificial graphite; carbon black, such as carbon black, acetylene black, Ketjen black, channel black, furnace black, lamp black, and thermal black; conductive fibers such as carbon fiber and metal fiber; conductive tubes such as carbon nanotubes; fluorocarbon; metal powders such as aluminum and nickel powder; conductive whiskers such as zinc oxide and potassium titanate; conductive metal oxides such as titanium oxide; conductive materials such as polyphenylene derivatives.

The conductive material may be included in the negative electrode active material layer in an amount of about 0.5% by weight to 10% by weight, for example, about 1% by weight to 5% by weight.

The thickness of the negative electrode active material layer may be about 10 µm to 200 µm, for example, about 20 µm to 150 µm.

The negative electrode may be manufactured by coating a negative electrode slurry containing a negative electrode active material, a binder, a conductive material, and a solvent for forming a negative electrode slurry on at least one side of the negative electrode collector, followed by drying and rolling.

The solvent for forming the negative electrode slurry may include at least one selected from the group consisting of distilled water, N-methyl-2-pyrrolidone (NMP), ethanol, methanol, and isopropyl alcohol, for example, in terms of facilitating dispersion of the negative electrode active material, the binder, and/or the conductive material. According to one embodiment, the solvent may include distilled water. The solid content of the negative electrode slurry may be about 30% by weight to 80% by weight, for example, about 40% by weight to 70% by weight.

### (3) Separator

The separator may be interposed between the positive electrode and the negative electrode.

In addition, the separator that may be used herein may be any porous polymer films commonly used as a separator such as, for example, a porous polymer film made of polyolefin-based polymers such as ethylene homopolymer, propylene homopolymer, ethylene/butene copolymer, ethylene/hexene copolymer, and ethylene/methacrylate copolymer, which may be used alone or laminated therewith. Alternatively, the separator that may be used herein may be any porous non-woven fabrics, for example, non-woven fabrics made of high melting point glass fibers, polyethylene terephthalate fibers, or the like, but not limited thereto. Further, a coated separator containing ceramic components or polymer materials may be used to ensure heat resistance or mechanical strength, and may optionally be used in a single-layer or multi-layer structure.

### (4) Non-aqueous Electrolyte

The non-aqueous electrolyte includes a lithium salt and an organic solvent.

### 1) Lithium salt

As for the lithium salt used herein, various lithium salts commonly used in non-aqueous electrolytes for lithium secondary batteries may be used without limitation. For example, the lithium salt includes Li⁺ as a cation, and as an anion, at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻.

For example, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂). For example, the lithium salt may include at least one selected from the group consisting of LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂), and LiBETI (LiN(SO₂CF₂CF₃)₂)

The lithium salt may be included in the non-aqueous electrolyte at a concentration of about 0.5 M to 5 M, for example, about 0.8 M to 4 M, or about 0.8 M to 2.0 M. When the concentration of the lithium salt satisfies the above range, the lithium ion yield (Li⁺ transference number) and the degree of dissociation of lithium ions are improved, thereby improving the output characteristics of the battery.

### 2) Organic solvent

The organic solvent includes a first organic solvent and a second organic solvent.

The first organic solvent includes ethylene carbonate.

The ethylene carbonate is an organic solvent having a high viscosity and a high dielectric constant, which may easily dissociate the lithium salt in the electrolyte.

The first organic solvent may further include, in addition to the ethylene carbonate, at least one selected from the group consisting of fluoroethylene carbonate (FEC), propylene carbonate (PC), 1,2-butylene carbonate, 2,3-butylene carbonate, 1,2-pentylene carbonate, 2,3-pentylene carbonate, vinylene carbonate, γ-butyrolactone, γ-valerolactone, γ-caprolactone, σ-valerolactone, and ε-caprolactone, but is not limited thereto.

The second organic solvent includes diethyl carbonate and propyl propionate. In the case of the lithium secondary battery of the present disclosure, the use of diethyl carbonate and propyl propionate in combination as the second organic solvent significantly reduces the amount of gas generated when perlithium manganese-rich oxide is used as the positive electrode component, thereby significantly improving the lifespan performance of the lithium secondary battery.

For example, when propyl propionate is decomposed, the amount of carbon dioxide (CO₂) generated is less, compared to a case where other organic solvents such as ethyl methyl carbonate are used. In addition, propyl propionate has low reactivity with reactive oxygen that may be released from perlithium manganese-rich oxide, which may further reduce the amount of gas generated. That is, using propyl propionate shows a better effect compared to using other ester-based solvents such as ethyl propionate, which has lower oxidation stability than propyl propionate. While propyl propionate is used as the second organic solvent in the present embodiment, it is possible to apply, as the second organic solvent, any solvent that is capable of reducing the amount of carbon dioxide (CO₂) generated when perlithium manganese-rich oxide is used as the positive electrode component and has low reactivity with reactive oxygen that may be released from perlithium manganese-rich oxide.

However, despite the advantages described above, propyl propionate has poor reduction stability and may be subject to degradation at the negative electrode, resulting in poor lifespan performance. Therefore, this disadvantage may be overcome by using propyl propionate, for example in combination with another solvent, rather than using propyl propionate alone as a component of the second organic solvent.

According to an embodiment of the present disclosure, diethyl carbonate is used together with propyl propionate as a component of the second organic solvent. Diethyl carbonate is a relatively stable solvent in both oxidation and reduction. Therefore, when diethyl carbonate and propyl propionate are used together, only the advantages of propyl propionate, such as the gas generation reduction effect, may be exhibited. Accordingly, by using the first organic solvent (containing ethylene carbonate) and the second organic solvent (containing diethyl carbonate and propyl propionate), the present disclosure may have an excellent capacity retention rate and lower the amount of gas generation, thereby preventing, for example, volume expansion of the cell. Although diethyl carbonate has been applied as a second solvent in combination with propyl propionate according to an embodiment, the present disclosure is not limited thereto. For example, any solvent capable of complementing the reduction stability of propyl propionate may be selected as a second solvent in combination with propyl propionate.

Meanwhile, a linear carbonate-based solvent other than diethyl carbonate, such as dimethyl carbonate or ethyl methyl carbonate, has low oxidation stability and high reactivity to reactive oxygen derived from perlithium manganese-rich oxide, which can easily decompose and cause gas generation and increased resistance. However, if these problems are properly overcome, the linear carbonate-based solvent may be used as a second organic solvent in combination with propyl propionate.

Although the effects of the present disclosure, such as the feature of lowering the amount of gas generated in the lithium secondary battery as described above, are uniquely expressed when perlithium manganese-rich oxide is used as a positive electrode active material, the organic solvents of the present disclosure may be used in combination for limited purposes in other positive electrode active materials, such as high-nickel-containing lithium nickel manganese cobalt transition metal oxides (e.g., NCM-based active materials containing 80 mol% or more Ni as a transition metal), in which the generation of reactive oxygen and excessive elution of Mn are not significant problems.

According to an embodiment, the volume ratio of diethyl carbonate and propyl propionate is about 1:99 to 99:1, for example, about 5:95 to 95:5, about 12:88 to 88:12, or about 40:60 to 60:40. Within the above-mentioned range, it is possible to suppress gas generation at high temperatures of the lithium secondary battery as described above, and to implement a capacity maintenance effect by securing negative electrode stability.

The second organic solvent may further include another additional second organic solvent along with the diethyl carbonate and the propyl propionate at a level that does not impair the above-described effects.

For example, the second organic solvent may further include, in addition to the diethyl carbonate and propyl propionate, at least one selected from the group consisting of ethyl methyl carbonate, dimethyl carbonate, dipropyl carbonate, methyl propyl carbonate, ethyl propyl carbonate, methyl acetate, ethyl acetate, propyl acetate, methyl propionate, ethyl propionate, and butyl propionate. According to an embodiment, the second organic solvent may further include ethyl methyl carbonate in terms of enhancing ionic conductivity.

The volume ratio of the first organic solvent and the second organic solvent may be about 10:90 to 50:50, for example, about 15:85 to 40:60, or about 15:85 to 35:65. When the volume ratio is within the above-mentioned range, it is possible to achieve the high ion transfer properties of the non-aqueous electrolyte and an appropriate level of viscosity, while reducing the gas generation from the perlithium manganese-rich oxide described above, thereby further improving the lifespan performance of the positive and negative electrodes.

In addition, the organic solvent may include about 10% by volume to 50% by volume of the ethylene carbonate, about 5% by volume to 80% by volume of the diethyl carbonate, and about 5% by volume to 80% by volume of the propyl propionate. For example, the organic solvent may include about 15% by volume to 40% by volume of the ethylene carbonate, about 8% by volume to 75% by volume of the diethyl carbonate, and about 8% by volume to 75% by volume of the propyl propionate. Alternatively, the organic solvent may include about 15% by volume to 35% by volume of the ethylene carbonate, about 30% by volume to 50% by volume of the diethyl carbonate, and about 30% by volume to 50% by volume of the propyl propionate. Within the above-mentioned range, it is possible to achieve the high ion transfer properties and an appropriate level of viscosity of the non-aqueous electrolyte while reducing the gas generation from the above-described perlithium manganese-rich oxide, thereby further improving the lifespan performance of the positive and negative electrodes.

Meanwhile, the organic solvent may further include, without limitation, an organic solvent commonly used in non-aqueous electrolytes as needed. For example, the organic solvent may include at least one additional organic solvent selected from the group consisting of an ether-based organic solvent, a glyme-based solvent, and a nitrile-based organic solvent.

The ether-based solvent used herein may be any one selected from the group consisting of dimethyl ether, diethyl ether, dipropyl ether, methyl ethyl ether, methyl propyl ether, ethyl propyl ether, 1,3-dioxolane (DOL), and 2,2-bis (trifluoromethyl )-1,3-dioxolane (TFDOL), or a mixture of two or more thereof, but is not limited thereto.

The glyme-based solvent has a high dielectric constant and low surface tension compared to the linear carbonate-based organic solvent, and low reactivity with metal, and may include at least one selected from the group consisting of dimethoxyethane (glyme, DME), diethoxyethane, diglyme, triglyme, and tetra-glyme (TEGDME), but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, and 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

### 3) Additive

The non-aqueous electrolyte may further include an additive along with the lithium salt and the organic solvent. The additive may be included in the non-aqueous electrolyte to exert the scavenging effect of reactive oxygen in the perlithium manganese-rich oxide, to strengthen the SEI film on the positive and negative electrodes to prevent gas generation due to electrolyte side reactions, to prevent the non-aqueous electrolyte from decomposing and causing negative electrode collapse in high power environments, or for low temperature high rate discharge characteristics, high temperature stability, overcharge protection, and battery expansion inhibition at high temperatures.

The additive may include at least one selected from the group consisting of coumarine, vinylene carbonate, vinyl ethylene carbonate, fluoroethylene carbonate, propane sultone, propene sultone, succinonitrile, adiponitrile, ethylene sulfate, lithium difluoro phosphate (LiDFP), lithium tetrafluoroborate (LiBF₄), lithium difluoro(oxalato)borate (LiODFB), lithium bis-(oxalato)borate (LiBOB), 3-trimethoxysilanyl-propyl-N-aniline (TMSPa), tris(trimethylsilyl) Phosphite (TMSPi), and a compound represented by Formula 1:

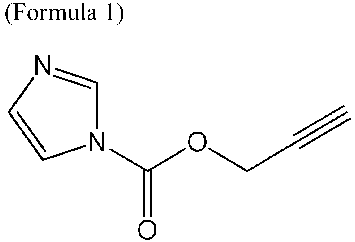

The additive may include, for example, at least one selected from the group consisting of vinylene carbonate, propane sultone, ethylene sulfate, LiDFP, LiBF₄, and the compound represented by Formula 1.

The additive may be contained in an amount of about 0.1% by weight to 15% by weight in the non-aqueous electrolyte.

The shape of the lithium secondary battery of the present disclosure is not particularly limited, but may be a cylindrical shape using a can, a square shape, a pouch shape, or a coin shape.

Hereinafter, the present disclosure will be described in more detail through Examples. However, the following examples are intended to illustrate the invention and are not intended to limit the scope of the present disclosure. It will be obvious to those skilled in the art that various changes and modifications may be made within the scope of the present description and the technical idea, and that such changes and modifications fall within the scope of the appended claims.

### Examples and Comparative Examples

### Example 1

### (Preparation of Non-aqueous Electrolyte)

A mixture of ethylene carbonate, diethyl carbonate, and propyl propionate in a volume ratio of 20:40:40 was used as an organic solvent.

A non-aqueous electrolyte was prepared by adding LiPF₆ as a lithium salt, and vinylene carbonate (VC), propane sultone (PS), ethylene sulfate (ESa), LiDFP, LiBF₄, and the compound represented by Formula 1 as additives to the organic solvent.

The LiPF₆ was contained in the non-aqueous electrolyte at a molar concentration of 1.2 M.

In addition, the non-aqueous electrolyte contained 0.5% by weight of vinylene carbonate, 0.8% by weight of propane sultone, 1.0% by weight of ethylene sulfate, 1.0% by weight of LiDFP, 0.5% by weight of LiBF₄, and 0.1% by weight of the compound represented by Formula 1.

### (Preparation of Lithium Secondary Battery)

A positive electrode active material (Li_{1.3}[Ni_{0.35}Mn_{0.65}]O_{2.33}, perlithium manganese-rich oxide), a conductive material (carbon nanotube), and a binder (PVdF) were added to N-methyl-2-pyrrolidone (NMP) serving as a solvent in a weight ratio of 97.4:0.6:2.0 to prepare a positive electrode mixture slurry (48% by weight of solid). The positive electrode mixture slurry was applied to one side of a positive electrode collector (Al thin film) having a thickness of 12 µm, dried, and roll pressed to prepare a positive electrode.

A negative electrode active material (a mixture of artificial graphite, natural graphite, and SiO), a conductive material (carbon black), and a binder (PVdF) were added to distilled water serving as a solvent in a weight ratio of 95.7:1.0:3.3 to prepare a negative electrode mixture slurry (70% by weight of solid). The negative electrode mixture slurry was applied to one side of a negative electrode collector (Cu thin film) having a thickness of 8 µm, dried, and roll pressed to prepare a negative electrode.

A separator made of porous polyethylene film was interposed between the prepared positive and negative electrodes in a dry room, and then the prepared non-aqueous electrolyte was injected to prepare a secondary battery.

### Example 2

A lithium secondary battery was prepared in the same manner as in Example 1, except that ethylene carbonate, diethyl carbonate, and propyl propionate were used as organic solvents for the non-aqueous electrolyte in a different ratio than in Example 1, i.e., a volume ratio of 20:10:70.

### Example 3

A lithium secondary battery was prepared in the same manner as in Example 1, except that ethylene carbonate, diethyl carbonate, and propyl propionate were used as organic solvents for the non-aqueous electrolyte in a different ratio than in Examples 1 and 2, i.e., a volume ratio of 20: 70:10.

### Comparative Example 1

A lithium secondary battery was prepared in the same manner as in Example 1, except that ethylene carbonate and diethyl carbonate were used as organic solvents for the non-aqueous electrolyte in a volume ratio of 20:80. For example, instead of using ethylene carbonate, diethyl carbonate, and propyl propionate as organic solvents as in Example 1, a lithium secondary battery was prepared in Comparative Example 1 using only ethylene carbonate and diethyl carbonate as organic solvents, without propyl propionate.

### Comparative Example 2

A lithium secondary battery was prepared in the same manner as in Example 1, except that ethylene carbonate and propyl propionate were used as organic solvents for the non-aqueous electrolyte in a volume ratio of 20:80. For example, instead of using ethylene carbonate, diethyl carbonate, and propyl propionate as organic solvents as in Example 1, a lithium secondary battery was prepared in Comparative Example 2 using only ethylene carbonate and propyl propionate as organic solvents, without diethyl carbonate.

### Comparative Example 3

A lithium secondary battery was prepared in the same manner as in Example 1, except that ethylene carbonate and ethyl propionate were used as organic solvents for the non-aqueous electrolyte in a volume ratio of 20:80. For example, instead of using ethylene carbonate, diethyl carbonate, and propyl propionate as organic solvents as in Example 1, a lithium secondary battery was prepared in Comparative Example 3 using only ethylene carbonate and ethyl propionate as organic solvents.

### Comparative Example 4

A lithium secondary battery was prepared in the same manner as in Example 1, except that ethylene carbonate and ethyl methyl carbonate were used as organic solvents for the non-aqueous electrolyte in a volume ratio of 20:80. For example, instead of using ethylene carbonate, diethyl carbonate, and propyl propionate as organic solvents as in Example 1, a lithium secondary battery was prepared in Comparative Example 4 using only ethylene carbonate and ethyl methyl carbonate as organic solvents.

### Comparative Example 5

A lithium secondary battery was prepared in the same manner as in Example 1, except that ethylene carbonate, dimethyl carbonate, and propyl propionate were used as organic solvents in a volume ratio of 20:40:40. For example, a lithium secondary battery was prepared in Comparative Example 5 using dimethyl carbonate as an organic solvents, instead of diethyl carbonate in Example 1.

### Comparative Example 6

A lithium secondary battery was prepared in the same manner as in Example 1, except that ethylene carbonate, ethyl methyl carbonate, and propyl propionate were used as organic solvents in a volume ratio of 20:40:40. For example, a lithium secondary battery was prepared in Comparative Example 6 using ethyl methyl carbonate as organic solvents, instead of diethyl carbonate in Example 1.

### Experimental Example

### Experimental Example 1: Evaluation of high temperature cycle capacity retention rate

Each of lithium secondary batteries of Examples 1 to 3 and Comparative Examples 1 to 6 prepared above was charged and discharged for 200 cycles, each of which includes charging to 4.35 V and 1/40 C under conditions of constant current/constant voltage (CC/CV) and 0.33 C at 45 °C, and discharging to 2.0 V under conditions of constant current (CC) and 0.33 C, using an electrochemical charge and discharge device.

The capacity retention rate was calculated using the equation below, and the results were shown in Table 1 below. Capacity retention rate (%) = {(discharge capacity after 200 cycles)/(discharge capacity after 1 cycle)} × 100

### Experimental Example 2: Evaluation of volume increase rate after high temperature cycle charging and discharging

The lithium secondary batteries of Examples 1 to 3 and Comparative Examples 1 to 6 prepared above were charged and discharged for 200 cycles in the same manner as in Experimental Example 1 using an electrochemical charge and discharge device. At this time, the volume of the lithium secondary battery before charging and discharging (initial volume) and the volume of the lithium secondary battery after 200 cycles were measured, and the volume increase rate was calculated using the following equation. The results are shown in Table 1 below. Volume increase rate (%) = {(Volume of lithium secondary battery after 200 cycles - initial volume)/(initial volume)} × 100

**Table 1**

| | Experimental Example 1 | Experimental Example 2 |
|---|---|---|
| | Capacity retention rate (%, 45 °C, 200^{th} cycle) | Volume increase rate (%, 45 °C, 200^{th} cycle) |
| Example 1 | 94.5 | 22.6 |
| Example 2 | 91.7 | 26.3 |
| Example 3 | 94.1 | 24.1 |
| Comparative Example 1 | 92.7 | 31.6 |
| Comparative Example 2 | 88.6 | 28.4 |
| Comparative Example 3 | 81.7 | 49.6 |
| Comparative Example 4 | 87.5 | 44.8 |
| Comparative Example 5 | 84.2 | 54.7 |
| Comparative Example 6 | 86.8 | 42.5 |

Referring to Table 1 above, it can be seen that the lithium secondary batteries of Examples 1 to 3, in which a positive electrode including perlithium manganese-rich oxide and a non-aqueous electrolyte including ethylene carbonate, diethyl carbonate, and propyl propionate as organic solvents are combined, have a significant improvement in both the capacity retention rate and the volume increase rate during high temperature cycle charging and discharging, compared to the case of Comparative Examples 1 to 6, which did not use propyl propionate as an organic solvent or were prepared in a combination different from Examples 1 to 3.

### Reference Example

### Reference Example 1

### (1) Preparation of Non-aqueous Electrolyte

A non-aqueous electrolyte was prepared in the same manner as in Example 1.

### (2) Preparation of Lithium Secondary Battery

A positive electrode active material (LiNi_{0.85}Co_{0.05}Mn_{0.07}Al_{0.03}O₂), a conductive material (carbon nanotube), and a binder (polyvinylidene fluoride) were added to N-methyl-2-pyrrolidone (NMP) serving as a solvent in a weight ratio of 98.0:0.7:1.3 to prepare a positive electrode mixture slurry (76.5% by weight of solid). The positive electrode mixture slurry was applied to one side of a positive electrode collector (Al thin film) having a thickness of 12 µm, dried, and roll pressed to prepare a positive electrode. That is, in Reference Example 1, a positive electrode was prepared using a different type of positive electrode active material than that of Example 1, for example, high nickel-containing lithium nickel cobalt manganese oxide.

A negative electrode active material (artificial graphite), a conductive material (carbon black), and a binder (styrene-butadiene rubber) were added to distilled water serving as a solvent in a weight ratio of 96.5:1.5:2.0 to prepare a negative electrode mixture slurry (50% by weight of solid). The positive electrode mixture slurry was applied to one side of a negative electrode collector (Cu thin film) having a thickness of 8 µm, dried, and roll pressed to prepare a negative electrode.

A separator made of porous polyethylene film was interposed between the prepared positive and negative electrodes in a dry room, and then the prepared non-aqueous electrolyte was injected to prepare a secondary battery.

### Reference Example 2

A lithium secondary battery was prepared in the same manner as in Reference Example 1, except that the non-aqueous electrolyte prepared in Comparative Example 1 was used instead of the non-aqueous electrolyte prepared in Example 1.

### Reference Example 3

A lithium secondary battery was prepared in the same manner as in Reference Example 1, except that the non-aqueous electrolyte prepared in Comparative Example 2 was used instead of the non-aqueous electrolyte prepared in Example 1.

### Reference Experimental Example 1: Evaluation of high temperature cycle capacity retention rate

Each of lithium secondary batteries of Reference Examples 1 to 3 prepared above was charged and discharged for 200 cycles, each of which includes charging to 4.2 V and 1/40 C under conditions of constant current/constant voltage (CC/CV) and 0.33 C at 45 °C, and discharging to 2.5 V under conditions of 0.33 C using an electrochemical charge and discharge device.

The capacity retention rate was calculated using the equation below, and the results were shown in Table 2 below. Capacity retention rate (%) = {(discharge capacity after 200 cycles)/(discharge capacity after 1 cycle)} × 100

### Reference Experimental Example 2: Evaluation of volume increase rate after high temperature cycle charging and discharging

The lithium secondary batteries of Reference Examples 1 to 3 prepared above were charged and discharged for 200 cycles in the same manner as in Reference Experimental Example 1 using an electrochemical charge and discharge device. At this time, the volume of the lithium secondary battery before charging and discharging (initial volume) and the volume of the lithium secondary battery after 200 cycles were measured, and the volume increase rate was calculated using the following equation. The results are shown in Table 2 below. Volume increase rate (%) = {(Volume of lithium secondary battery after 200 cycles - initial volume)/(initial volume)} × 100

**Table 2**

| | Reference Experimental Example 1 | Reference Experimental Example 2 |
|---|---|---|
| | Capacity retention rate (%, 45 °C, 200^{th} cycle) | Volume increase rate (%, 45 °C, 200^{th} cycle) |
| Reference Example 1 | 84.8 | 16.1 |
| Reference Example 2 | 98.2 | 4.9 |
| Reference Example 3 | 71.6 | 31.6 |

Referring to Table 2, although the secondary battery of Reference Example 1, which used high nickel lithium nickel cobalt manganese oxide as the positive electrode active material, included an organic solvent containing all of ethylene carbonate, diethyl carbonate, and propyl propionate in the non-aqueous electrolyte, both the capacity retention rate and the volume increase rate are unsatisfactory, compared to the secondary battery in Reference Example 2, which used only ethylene carbonate and diethyl carbonate as organic solvents. From this, it can be seen that, when perlithium manganese-rich oxide is not used as the positive electrode active material, the effect of using ethylene carbonate, diethyl carbonate, and propyl propionate in combination as organic solvents is limited, compared to the case where perlithium manganese-rich oxide is used as the positive electrode active material.

Furthermore, comparing Reference Examples 2 and 3, it can be seen that, when high-nickel-containing lithium nickel cobalt manganese oxide, rather than perlithium manganese-rich oxide, is used as the positive electrode active material, the use of propyl propionate as an organic solvent has only a limited effect on the cycle life of the manufactured lithium secondary battery or on preventing cell volume expansion.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A lithium secondary battery comprising:
a positive electrode;
a negative electrode;
a separator interposed between the positive electrode and the negative electrode; and
a non-aqueous electrolyte,
wherein the positive electrode includes a positive electrode active material,
the positive electrode active material includes a perlithium manganese-rich oxide containing 50 mol% or more of Mn based on all metal elements excluding lithium, and having a molar ratio of lithium to transition metal exceeding 1,
the non-aqueous electrolyte includes a lithium salt and an organic solvent,
the organic solvent includes a first organic solvent and a second organic solvent,
the first organic solvent includes ethylene carbonate, and
the second organic solvent includes diethyl carbonate and propyl propionate.

2. The lithium secondary battery according to claim 1, wherein the perlithium manganese-rich oxide is a compound represented by Formula A:
[Formula A] Li₁₊ₛ[NiₜCoᵤMnᵥM¹_{w}]O_{2+z}
wherein, M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, and
0.05≤s≤1, 0≤t≤0.5, 0≤u≤0.3, 0.5≤v<1.0, 0≤w≤0.2, and 0≤z≤1.

3. The lithium secondary battery according to claim 1, wherein a volume ratio of the first organic solvent and the second organic solvent is 10:90 to 50:50.

4. The lithium secondary battery according to claim 1, wherein a volume ratio of the diethyl carbonate and the propyl propionate is 1:99 to 99:1.

5. The lithium secondary battery according to claim 1, wherein a volume ratio of the diethyl carbonate and the propyl propionate is 12:88 to 88:12.

6. The lithium secondary battery according to claim 1, wherein the organic solvent includes 10% by volume to 50% by volume of the ethylene carbonate, 5% by volume to 80% by volume of the diethyl carbonate, and 5% by volume to 80% by volume of the propyl propionate.

7. The lithium secondary battery according to claim 1, wherein the second organic solvent further includes at least one selected from the group consisting of ethyl methyl carbonate, dimethyl carbonate, dipropyl carbonate, methyl propyl carbonate, ethyl propyl carbonate, methyl acetate, ethyl acetate, propyl acetate, methyl propionate, ethyl propionate, and butyl propionate.

8. The lithium secondary battery according to claim 1, wherein the second organic solvent further includes ethyl methyl carbonate.

9. The lithium secondary battery according to claim 1, wherein the non-aqueous electrolyte further includes an additive, and
the additive includes at least one selected from the group consisting of coumarine, vinylene carbonate, vinyl ethylene carbonate, fluoroethylene carbonate, propane sultone, propene sultone, succinonitrile, adiponitrile, ethylene sulfate, lithium difluoro phosphate (LiDFP), lithium tetrafluoroborate (LiBF₄), lithium difluoro(oxalato)borate (LiODFB), lithium bis-(oxalato)borate (LiBOB), 3-trimethoxysilanyl-propyl-N-aniline (TMSPa), tris(trimethylsilyl) Phosphite (TMSPi), and a compound represented by Formula 1:

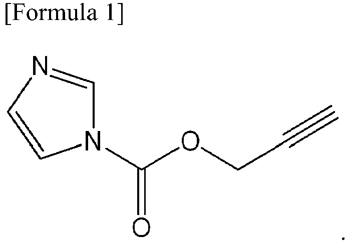

10. The lithium secondary battery according to claim 1, wherein the lithium salt includes at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂).

11. The lithium secondary battery according to claim 1, wherein the lithium salt is included in the non-aqueous electrolyte in a molar concentration of 0.5 M to 5.0 M.

12. The lithium secondary battery according to claim 1, wherein the negative electrode includes a negative electrode active material, and
the negative electrode active material includes at least one selected from a carbon-based active material and a (semi)metal-based active material.

13. A method of manufacturing a lithium secondary battery, comprising:
storing, in a battery case, an electrode assembly including a positive electrode, a negative electrode, and a separator interposed between the positive electrode and the negative electrode; and
injecting a non-aqueous electrolyte into the battery case in which the electrode assembly is stored,
wherein the positive electrode includes a positive electrode active material,
the positive electrode active material includes a perlithium manganese-rich oxide containing 50 mol% or more of Mn based on all metal elements excluding lithium, and having a molar ratio of lithium to transition metal exceeding 1,
the non-aqueous electrolyte includes a lithium salt and an organic solvent,
the organic solvent includes a first organic solvent and a second organic solvent,
the first organic solvent includes ethylene carbonate, and
the second organic solvent includes diethyl carbonate and propyl propionate.

14. The method according to claim 13, wherein the perlithium manganese-rich oxide is a compound represented by Formula A:
[Formula A] Li₁₊ₛ[NiₜCoᵤMnᵥM¹_{w}]O_{2+z}
wherein, M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B and Mo, and
0.05≤s≤1, 0≤t≤0.5, 0≤u≤0.3, 0.5≤v<1.0, 0≤w≤0.2, and 0≤z≤1.

15. The method according to claim 13, wherein a volume ratio of the first organic solvent and the second organic solvent is 10:90 to 50:50.

16. The method according to claim 13, wherein a volume ratio of the diethyl carbonate and the propyl propionate is 1:99 to 99:1.

17. The method according to claim 13, wherein a volume ratio of the diethyl carbonate and the propyl propionate is 12:88 to 88:12.

18. The method according to claim 13, wherein the organic solvent includes 10% by volume to 50% by volume of the ethylene carbonate, 5% by volume to 80% by volume of the diethyl carbonate, and 5% by volume to 80% by volume of the propyl propionate.
